# EUROPÄISCHE PATENTANMELDUNG

(11) **EP 2 899 007 A1**
(43) Veröffentlichungstag der Anmeldung: **29.07.2015**
(21) Anmeldenummer: 14152882.8
(22) Anmeldetag: 28.01.2014
(51) Int. Cl.: B29C 33/00, B29C 33/04, B29C 33/40, B29C 45/73, B29C 45/78

(54) **Spritzguss-Werkzeug und Gießanlage mit dem Spritzguss-Werkzeug**

(71) Anmelder: Seuffer GmbH & Co. KG, 75365 Calw (DE)
(72) Erfinder: Zachmann, Wilfried, 75365 Calw (DE)
(74) Vertreter: Winter, Brandl, Fürniss, Hübner, Röss, Kaiser, Polte - Partnerschaft mbB

(57) **Zusammenfassung**

Die vorliegende Erfindung betrifft ein Spritzguss-Werkzeug (3), das mehrere Werkzeugteile (3a, 3b) umfasst, aus einem Kunststoffmaterial besteht und in einen Werkzeugträger (2) einer Gießanlage (1) zur Durchführung von Gießvorgängen eingesetzt werden kann. Das Spritzguss-Werkzeug (3) umfasst zumindest eines der mehreren Werkzeugteile (3a, 3b) einen inneren Raum aufweist zur Aufnahme eines Kühlmediums (5), und das zumindest eine Werkzeugteil (3a, 3b) eine Kühleinrichtung (4, 40, 41 bis 44) aufweist zum Bewirken einer Durchströmung des inneren Raums mit dem Kühlmedium (5), und eine Steuerungseinrichtung (7) vorgesehen ist zur Steuerung der Strömung des Kühlmediums (5) durch das zumindest eine Werkzeugteil (3a, 3b), und die Steuerungseinrichtung (7) vorgesehen ist zur Beendigung der Strömung des Kühlmediums (5) durch das zumindest eine Werkzeugteil (3a, 3b) und Aufrechterhalten der vollständigen Füllung des inneren Raums mit dem Kühlmedium (5) zumindest während eines Gießvorgangs. Die Erfindung betrifft ferner die Gießanlage mit dem Spritzguss-Werkzeug.

## Beschreibung

Die vorliegende Erfindung betrifft ein Spritzguss-Werkzeug, und insbesondere ein Spritzguss-Werkzeug aus einem Kunststoffmaterial mit einer optimierten Wärmeableitung sowie eine Gießanlage zur Durchführung von Gießvorgängen mittels Kunststoffspritzguss mit dem Spritzguss-Werkzeug.

Im Bereich der Kunststoff-Spritzgusstechnik bestehen bekannte Verfahren darin, ein später zu einem Werkstück zu formendes Kunststoffmaterial zu plastifizieren und in ein entsprechendes Spritzguss-Werkzeug (Spritzgussform) warm und mit einem vorbestimmten Druck einzubringen. Das Spritzguss-Werkzeug weist zumindest zwei und in Abhängigkeit von weiteren Anwendungen und der Ausführung und Gestaltung des gewünschten Werkstücks mehr als zwei Teile auf, die zur Bildung eines entsprechenden Hohlraums zur Aufnahme des plastifizierten Kunststoffmaterials zusammengefahren bzw. geschlossen werden. In dem in dem Spritzguss-Werkzeug gebildeten Hohlraum erkaltet nach dem Einbringen das plastifizierte Kunststoffmaterial, so dass ein festes und aus dem Spritzguss-Werkzeug entnehmbares Werkstück gebildet wird. Beim Einbringen des plastifizierten Kunststoffmaterials nimmt dieses vorzugsweise alle zur Verfügung stehenden Hohlräume des Kunststoffwerkzeugs ein, so dass das gewünschte Abbild des Werkzeugs und damit das Werkstück mittels eines derartigen Gießvorgangs entsteht.

Wurde nach dem Erkalten des Kunststoffmaterials das mehrteilige und vorzugsweise zweiteilige Werkzeug auseinandergesetzt, so dass das Werkstück entnommen werden kann, kann das Werkzeug erneut zusammengefahren oder geschlossen werden, so dass ein weiterer Gießvorgang durchgeführt werden kann.

Bei bekannten Werkzeugen besteht das Werkzeug im Allgemeinen aus einem Metall (zumeist aus Stahl oder Aluminium) und ist zumindest aus den vorstehend genannten zwei Teilen oder aus mehreren Teilen gebildet. Wird beispielsweise von einem Stahlwerkzeug (von einer Stahlform) ausgegangen, ergeben sich die Vorteile einer guten Wärmeableitung und die Möglichkeit einer präzisen Ausführung in Verbindung mit einer großen Anzahl von Gießvorgängen, die auch in dichter Folge durchgeführt werden können sowie einer hohen Lebensdauer des Werkzeugs. Das aus einem Metall gebildete Werkzeug zeichnet sich durch ein gutes Wärmeableitvermögen aus (ein sogenanntes gutes Wärmemanagement), so dass innerhalb einer bestimmten Zeitdauer eine Vielzahl von Gießvorgängen mit geringen Wartezeiten möglich ist und zwischen einzelnen Gießvorgängen eine vergleichsweise kurze Pause zum Abkühlen erforderlich und im Allgemeinen ausreichend ist.

Zur Beschleunigung der Abkühlung nach jeweiligen Gießvorgängen können in den zumindest zwei Teilen des Werkzeugs auch Kühlkanäle zum Zirkulieren eines Kühlmittels vorgesehen sein, wobei die Möglichkeit besteht, das gesamte Werkzeug in Verbindung mit vorbestimmten Kanälen mit dem Kühlmittel zur Verbesserung des Wärmeableitvermögens zu durchströmen.

Ein Spritzguss-Werkzeug aus einem Metall, wie beispielsweise Aluminium oder Stahl, führt jedoch zu erhöhten Kosten hinsichtlich des Materials des Werkzeugs, sowie zu erheblichen Kosten für die Bearbeitung des Werkzeugs in Abhängigkeit von der Komplexität des zu erzielenden Werkstücks. In Verbindung mit den hohen Investitionen für derartige Metallwerkzeuge ist dies nur wirtschaftlich und sinnvoll, wenn schon bei der Herstellung des Werkzeugs (der Gussform) bekannt ist, dass große Stückzahlen eines Werkstücks hergestellt werden sollen. Die Herstellung großer Stückzahlen eines Werkstücks wird durch geringe Wartezeiten in Folge des guten Wärmeableitvermögens des Werkzeugs aus einem Metall unterstützt.

Werden für den Bereich der Kunststoff-Spritzgusstechnik beispielsweise Werkzeuge oder Gussformen verwendet, die selbst aus einem Kunststoffmaterial bestehen, dann ergeben sich demgegenüber Vorteile einer erleichterten Herstellung und somit auch einer leichteren Handhabbarkeit. Insbesondere kann zur Herstellung einer derartigen Form ein sogenannter 3D-Drucker verwendet werden, bei dem in Abhängigkeit von einem jeweiligen Anwendungsbereich ein schnell aushärtendes Kunststoffmaterial eingesetzt und in aufeinanderfolgenden Schichten auf jeweils darunterliegende Schichten mittels eines Druckvorgangs aufgebracht wird, so dass im Ergebnis mit einem vergleichsweise geringen Aufwand ein vollständiges und in Abhängigkeit von der Anwendung auch mehrteiliges Werkzeug aus einem Kunststoffmaterial für eine Kunststoff-Spritzgusstechnik erzeugt werden kann. Ein derartiges Werkzeug kann mit sehr großer Genauigkeit und auf einfache und kostengünstige Weise mittels einer CAD-Software in Verbindung mit dem 3D-Drucker hergestellt werden. Vorteile ergeben sich besonders auch bei kleinen zu erwartenden Stückzahlen des Werkstücks und bei der Herstellung von Musterstücken.

Ein Spritzguss-Werkzeug aus einem Kunststoffmaterial weist jedoch den Nachteil einer ungünstigen Wärmeableitung auf, da Kunststoffmaterialien im Allgemeinen eine geringe Wärmeleitfähigkeit im Vergleich zu metallischen Werkstoffen besitzen. Hierdurch verlängert sich die Abkühlungszeit nach einem Gießvorgang erheblich, so dass zwischen den einzelnen Gießvorgängen lange und sich im Verlauf der Bearbeitung immer weiter verlängernde Wartezeiten (im Wesentlichen Abkühlungszeiten) ergeben. Mit jedem Gießvorgang erwärmt sich das Werkzeug weiter, da das beim Gießvorgang eingebrachte plastifizierte Kunststoffmaterial immer weitere Wärme abgibt.

Es ist auf diese Weise kaum möglich, eine größere Anzahl von Gießvorgängen während einer bestimmten Zeitdauer wirtschaftlich durchzuführen. Derartige Bedingungen stehen einem gewünschten kontinuierlichen Betrieb mit einem erforderlichen Durchsatz entgegen. Wird das Werkzeug bei mehreren aufeinanderfolgenden Gießvorgängen stärker erwärmt, kann die Entformung des Werkstücks schwierig werden und es kann ebenfalls das Werkzeug selbst und/oder das Werkstück beschädigt werden.

In diesem Zusammenhang offenbart die Patentschrift CH 370 566 eine Form zur Herstellung von Gegenständen, insbesondere aus Kunststoffen, wobei innerhalb einer ebenfalls aus einem Kunststoffmaterial gebildeten Form in der Nähe der Oberfläche der Form, die dem Werkstück gegenüberliegt, ein Raum mit einem wärmeleitenden Material gefüllt ist. Dieses Material kann beispielsweise Stahlkugeln gleichen oder unterschiedlichen Durchmessers umfassen, die eine feste Masse bilden und die Kunststoffform stabilisieren können. Es sind ferner Kühlkanäle für flüssige Kühlmedien vorgesehen, so dass die Kunststoffform mittels des Kühlmediums durchströmt und damit gekühlt werden kann. Die Druckschrift US 4 105 184 offenbart eine Form für Kunststoffspritztechnik, wobei zur Verbesserung der Wärmeableitung innerhalb des Materials (und insbesondere der Wände) der Kunststoffform Drahtstücke in größerer Anzahl und in verschiedener Art eingebaut sind. Die Drahtstücke weisen eine gute Wärmeleitfähigkeit auf und dienen zur schnelleren Kühlung der Form. Es sind ebenfalls Räume zur Durchströmung mittels eines Kühlmediums vorgesehen, wobei mittels der Drahtstücke Wärme von dem Werkstück über die Wände der Form in Richtung des Kühlmediums geleitet werden kann.

Die Druckschrift US 5 439 622 offenbart eine Form im Bereich der Kunststoff-Spritzgusstechnik, wobei Standzeiten der Form verbessert werden, indem auf die innere Oberfläche der Form gegenüber dem Werkstück eine dünne Metallschicht aufgebracht wird. Auf diese Weise wird ebenfalls die Wärmeleitfähigkeit verbessert. Es sind des Weiteren Kühlkanäle vorgesehen, mittels denen ein Kühlmedium zur Verbesserung der Abkühlung die Form durchströmen kann.

Aus den bekannten Formen und Werkzeugen geht hervor, dass die vorstehend betrachteten Maßnahmen zur Verbesserung der Wärmeableitfähigkeit und des Wärmemanagements bei einem Werkzeug oder einer Form aus Kunststoff teilweise einen erheblichen Aufwand erfordern, so dass die günstigen Bedingungen bei der Anwendung des Werkzeugs aus Kunststoff teilweise durch die Nachteile des Aufwands für ein verbessertes Kühlmanagement wieder aufgewogen oder auch übertroffen werden.

Der vorliegenden Erfindung liegt daher die Aufgabe zugrunde, ein Spritzguss-Werkzeug aus einem Kunststoffmaterial sowie eine Gießanlage zur Durchführung von Gießvorgängen mittels Kunststoffspritzguss mit dem Spritzguss-Werkzeug derart auszugestalten, dass auf einfache Weise ein verbesserter Wärmeabfluss in dem Werkzeug vorliegt und eine Erhöhung der Anzahl möglicher Gießvorgänge bei gleichzeitig hoher Qualität des Werkstücks gewährleistet ist.

Erfindungsgemäß wird diese Aufgabe mit einem Spritzguss-Werkzeug sowie mit der Gießanlage zur Durchführung von Gießvorgängen gemäß den in den Patentansprüchen angegebenen Merkmalen gelöst.

Die vorliegende Erfindung betrifft somit ein Spritzguss-Werkzeug, das mehrere Werkzeugteile umfasst, aus einem Kunststoffmaterial besteht und in einen Werkzeugträger einer Gießanlage zur Durchführung von Gießvorgängen eingesetzt werden kann, wobei zumindest eines der mehreren Werkzeugteile einen inneren Raum aufweist zur Aufnahme eines Kühlmediums, und das zumindest eine Werkzeugteil eine Kühleinrichtung aufweist zum Bewirken einer Durchströmung des inneren Raums mit dem Kühlmedium, und eine Steuerungseinrichtung vorgesehen ist zur Steuerung der Strömung des Kühlmediums durch das zumindest eine Werkzeugteil, und die Steuerungseinrichtung vorgesehen ist zur Beendigung der Strömung des Kühlmediums durch das zumindest eine Werkzeugteil und Aufrechterhalten der vollständigen Füllung des inneren Raums mit dem Kühlmedium zumindest während eines Gießvorgangs.

Die Erfindung betrifft ebenfalls eine Gießanlage zur Durchführung von Gießvorgängen mittels Kunststoffspritzguss, wobei die Gießanlage das Spritzguss-Werkzeug umfasst.

Mit dem erfindungsgemäßen Spritzguss-Werkzeug bzw. Werkzeug und der entsprechenden Gießanlage ist es auf einfache Weise möglich, eine Vielzahl von Gießvorgängen nacheinander mit vergleichsweise kurzen Zeitabständen durchzuführen, ohne dass die gesamte Gießanlage, in der das Werkzeug eingebaut ist, zum Erreichen einer vorbestimmten Abkühlung stillgesetzt werden muss. Das Werkzeug kann während der Vielzahl der Gießvorgänge in der Gießanlage verbleiben, ohne dass eine erhebliche Zunahme einer Erwärmung oder gar eine Beschädigung des Werkzeugs in Folge einer Erwärmung befürchtet werden muss. Des Weiteren ist das Werkzeug einfach herstellbar und bildet während eines Gießvorgangs ein stabiles Werkzeug, das auch bei dem unter Druck in das Werkzeug eingebrachten Kunststoffmaterial nicht nachgibt, d. h. keiner nennenswerten Verformung unterliegt sondern die gewünschte Form stabil beibehält.

Mittels der mit dem Werkzeug verbundenen Kühleinrichtung ist eine kontinuierliche und ausreichende Kühlung des Werkzeugs gewährleistet, wobei das das Werkzeug durchströmende Kühlmedium in entsprechenden Hohlräumen des Werkzeugs abgeschlossen werden kann, so dass das Werkzeug in Verbindung mit einer annähernd inkompressiblen Flüssigkeit insgesamt verformungsfrei bleibt. Das Kühlmedium kann auf einfache Weise und rasch ausgetauscht werden, wenn eine Erwärmung durch mehrere Gießvorgänge eingetreten ist. Es sind somit nur geringe Pausenzeiten erforderlich. Eine höhere Anzahl von Gießvorgängen in einer bestimmten Zeitdauer kann somit sicher und ohne Beeinträchtigung des Werkzeugs durchgeführt werden, wobei gleichzeitig das gebildete Werkstück eine hohe Qualität aufweist und die Haltbarkeit des Werkzeugs verbessert wird.

Weitere Ausgestaltungen der vorliegenden Erfindung sind in den Unteransprüchen angegeben.

Die Kühleinrichtung kann Ventileinrichtungen aufweisen, die entsprechend einer Ansteuerung durch die Steuerungseinrichtung zum Erlauben einer Strömung des Kühlmediums geöffnet und zum Aufrechterhalten der Füllung des inneren Raums des zumindest einen Werkzeugteils geschlossen werden.

Die Ventileinrichtungen können in einer Wand des zumindest einen Werkzeugteils angeordnet sein und im geschlossenen Zustand den inneren Raum des zumindest einen Werkzeugteils fluiddicht abschließen.

Die Ventileinrichtungen können in Kühlverbindungen oder in einer Kühleinheit der Kühleinrichtung angeordnet sein und im geschlossenen Zustand eine Strömung des Kühlmediums durch das zumindest eine Werkzeugteil verhindern und im geöffneten Zustand die Strömung des Kühlmediums durch das zumindest eine Werkzeugteil erlauben.

Das Werkzeug weist zumindest einen Temperatursensor auf zur Erfassung der Temperatur des Kühlmediums in dem zumindest einen Werkzeugteil, und es kann die Steuerungseinrichtung ausgebildet sein, die Ventileinrichtungen nach einem oder mehreren Gießvorgängen zu öffnen zum Zulassen einer Strömung des Kühlmediums durch das zumindest eine Werkzeugteil, wenn ein vorbestimmter Schwellenwert der Temperatur des Kühlmediums erreicht ist.

Jedes Werkzeugteil kann zumindest zwei Ventileinrichtungen aufweisen, und es können die Ventileinrichtungen eines Werkzeugteils während eines Gießvorgangs gleichzeitig geschlossen werden zum fluiddichten Abschließen des mit dem Kühlmedium vollständig gefüllten inneren Raums.

Das zumindest eine Werkzeugteil kann ein Werkzeugelement und ein Deckelelement aus einem gleichen oder unterschiedlichen Material wie das Werkzeugelement aufweisen und es kann das Deckelelement fluiddicht in das Werkzeugelement eingesetzt werden zur Bildung des inneren Raums. Es können ferner zumindest zwei Ventileinrichtungen in das Deckelement fluiddicht eingesetzt sein.

Das zumindest eine Werkzeugteil kann ein Werkzeugelement und ein Deckelelement umfassen, und es kann das Werkzeugelement an der dem Deckelelement gegenüberliegenden Seite Stege aufweisen, die sich in den inneren Raum bis zum Deckelelement erstrecken.

Die Stege können derart ausgebildet sein, dass sie in Anlage mit dem in das Werkzeugelement eingesetzten Deckelelement gelangen und in dem inneren Raum eine Mehrzahl von Kammern bilden, die von dem Kühlmedium durchströmt werden.

Die vorliegende Erfindung umfasst des Weiteren eine Gießanlage zur Durchführung von Gießvorgängen mittels Kunststoffspritzguss. Sie weist einen Träger zur Aufnahme eines Werkzeugs gemäß den vorstehenden Angaben.

Die Erfindung wird nachstehend anhand von Ausführungsbeispielen unter Bezugnahme auf die Zeichnungen näher beschrieben.
Es zeigen:
Figur 1 eine schematische Darstellung einer Gießanlage mit dem Gießwerkzeug,
Figur 2 eine schematische Darstellung der Anordnung des Werkzeugs gemäß Figur 1 in einem Werkzeugträger der Gießanlage,
Figur 3 eine Darstellung eines Teils des in den Werkzeugträger eingesetzten Werkzeugs gemäß Figur 1 mit weiteren Einzelheiten der Anordnung,
Figur 4 eine Darstellung eines Teils des Werkzeugs gemäß Figur 1 mit einer alternativen Anordnung, und
Figur 5 ein Teil des Werkzeugs gemäß Figur 1 mit einer Anordnung gemäß einer weiteren Alternative.

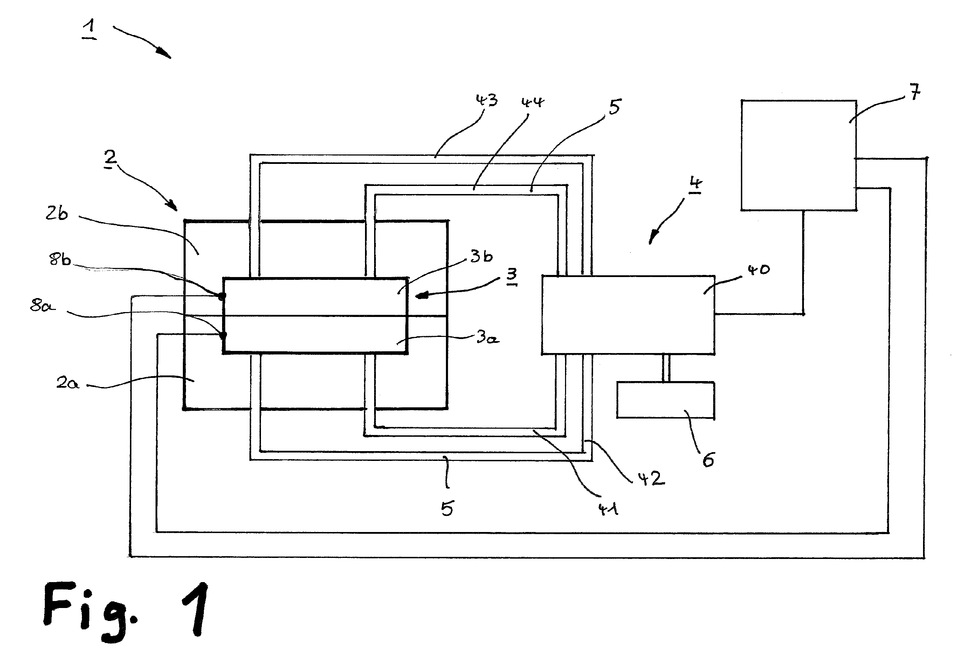

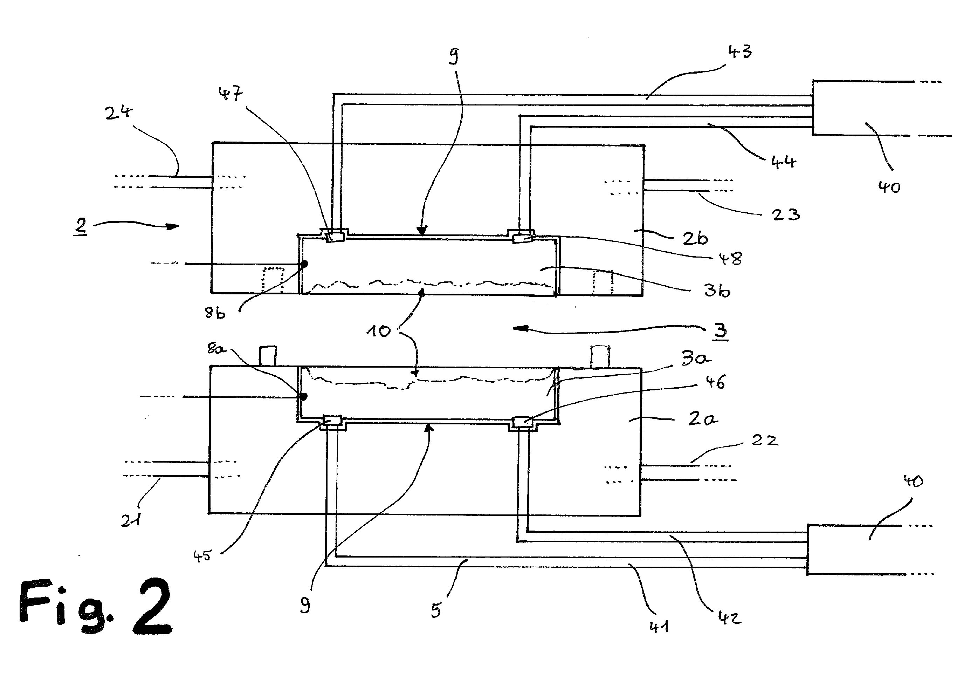

Die vorliegende Erfindung wird nachstehend in Verbindung mit den Figuren 1 und 2 hinsichtlich des grundlegenden Aufbaus beschrieben.

Figur 1 zeigt eine vereinfachte und schematische Darstellung einer Anlage zum Durchführen von Kunststoff-Spritzgussvorgängen (nachstehend vereinfacht als Gießanlage 1 bezeichnet), wobei die Gießanlage 1 einen Werkzeugträger oder Träger 2 für ein Werkzeug 3 aufweist. Das Werkzeug 3 besteht aus mehreren Teilen, und zur Vereinfachung der Darstellung der vorliegenden Erfindung aus beispielsweise zwei Teilen, einem ersten bzw. unteren Werkzeugteil 3a und einem zweiten bzw. oberen Werkzeugteil 3b. Die Werkzeugteile 3a und 3b sind in den Träger 2 eingesetzt, der seinerseits aus mehreren Trägerteilen besteht, und beispielsweise gemäß der vorliegenden Erfindung ohne eine Beschränkung hierauf aus einem ersten unteren Trägerteil 2a und einem zweiten oberen Trägerteil 2b besteht, wie es beispielsweise in Figur 2 dargestellt ist.

Im Einzelnen ist das Werkzeug 3 derart in den Träger 2 eingesetzt, dass das untere Werkzeugteil 3a in den unteren Trägerteil 2a eingesetzt ist, und das obere Werkzeugteil 3b in den oberen Trägerteil 2b eingesetzt ist.

Die Begriffe eines oberen oder unteren Teils beziehen sich auf die Darstellung der Erfindung in Figur 1 sowie in weiteren Figuren und sind nicht einschränkend auszulegen. Ein jeweils oberer oder unterer Teil kann auch in der Position gegenüber dem jeweils anderen Teil vertauscht werden, und es können in Abhängigkeit von der Anwendung und der Ausführung der Gießanlage 1 die Teile auch nebeneinander angeordnet sein, wobei jedoch jeweils ein Teil des Werkzeugs 3 in einen entsprechenden Teil des Trägers 2 eingesetzt ist, von diesem gehalten und getragen sowie mit diesem beim Zusammenfahre bewegt wird.

Das Werkzeug 3 (Spritzguss-Werkzeug) sowie der Träger 2 weisen eine entsprechende Zulaufeinrichtung auf zum Zuführen des flüssigen bzw. plastifizierten Kunststoffmaterials, sowie eine Entlüftung des Werkzeugs. Die jeweiligen Einrichtungen sind zur Vereinfachung der Darstellung in den Figuren nicht gezeigt.

Die Gießanlage 1 umfasst ferner eine Kühleinrichtung 4, die eine Kühleinheit 40 aufweist und wobei die Kühleinheit 40 mittels entsprechender Verbindungseinrichtungen, wie Rohre oder Schläuche, mit dem Träger 2 und dem Werkzeug 3 verbunden ist. Die Rohre oder Schläuche zwischen dem Träger 2 und dem Werkzeug 3 einerseits und der Kühleinheit 40 andererseits werden nachstehend als erste, zweite, dritte und vierte Kühlverbindung 41 bis 44 bezeichnet. Zwischen der Kühleinheit 40 der Kühleinrichtung 4 und dem unteren Trägerteil 2a und dem unteren Werkzeugteil 3a sind die erste und zweite Kühlverbindung 41 und 42 angeordnet. Zwischen der Kühleinheit 40 der Kühleinrichtung 4 und dem oberen Werkzeugteil 3b und dem oberen Trägerteil 2b sind die dritte und vierte Kühlverbindung 43 und 44 angeordnet.

In den Kühlverbindungen 41 bis 44 kann ein Kühlmedium 5 in Form einer Flüssigkeit zirkulieren, wobei die Kühleinheit 40 der Kühleinrichtung 4 zumindest eine entsprechende (in den Figuren nicht gezeigte) Pumpeneinrichtung aufweist, mittels der eine Strömung des Kühlmediums 5 in den Kühlverbindungen 41 bis 44 beispielsweise mit einem vorbestimmten geringen Druck erreicht werden kann. Das Kühlmedium 5 kann ein Öl oder ein entsprechend aufbereitetes Wasser sein. Das Kühlmedium 5 besteht vorzugsweise aus einer Flüssigkeit, auch aus einem Gemisch verschiedener Flüssigkeiten, und ist im Wesentlichen inkompressibel. Mittels eines Wärmetauschers 6 wird das Kühlmedium 5 gekühlt, indem seitens der Kühleinheit 40 das nach einer entsprechenden Folge von Gießvorgängen angewärmte Kühlmedium 5 den Wärmetauscher 6 durchströmt und seinerseits die aufgenommene Wärme abgeben kann.

Die vorstehend angegebene Kühleinrichtung 4 umfasst somit zumindest die Kühleinheit 40 sowie die erste, zweite, dritte und vierte Kühlverbindung 41 bis 44 einschließlich des Kühlmediums 5 sowie des Wärmetauschers 6. Hinsichtlich der Kühlverbindungen 41 bis 44, die mit einem jeweiligen Werkzeugteil 3a oder 3b verbunden sind, kann eine der Kühlverbindungen 41 bis 44 als Zulauf und die andere Kühlverbindung als Rücklauf bezeichnet werden.

Die Gießanlage 1 umfasst ferner eine Steuerungseinrichtung 7, die ausgebildet ist zur Steuerung der Gießanlage 1 und der einzelnen Gießvorgänge, sowie auch der Kühleinrichtung 4 im Hinblick auf das Zuführen des Kühlmediums 5 zu dem Werkzeug 3 und der Kühlung des Kühlmediums 5 in Abhängigkeit von seiner Erwärmung. Zur Erfassung verschiedener Temperaturen an dem Werkzeug 3 sind im Bereich des Werkzeugs 3 und auch im Bereich des Trägers 2 vorzugsweise mehrere Temperatursensoren angeordnet, die hinsichtlich der Übertragung von Erfassungssignalen mit der Steuerungseinrichtung 7 verbunden sind und an dem jeweiligen Ort eine dort herrschende Temperatur erfassen. In Figur 1 sind beispielsweise ein erster Temperatursensor 8a und ein zweiter Temperatursensor 8b angegeben, wobei der erste Temperatursensor 8a im unteren Trägerteil 2a am unteren Werkzeugteil 3a angeordnet ist, und der zweite Temperatursensor 8b beispielsweise im oberen Trägerteil 2b und an dem oberen Werkzeugteil 3b angeordnet ist. Weitere, in den Figuren nicht gezeigte Temperatursensoren können auch innerhalb der Kühlverbindungen 41 bis 44 sowie in der Kühleinrichtung 4 und im Wärmetauscher 6 sowie an weiteren Stellen im Träger 2 in Abhängigkeit von einem Bedarf und den Möglichkeiten einer Steuerung oder Regelung angeordnet sein.

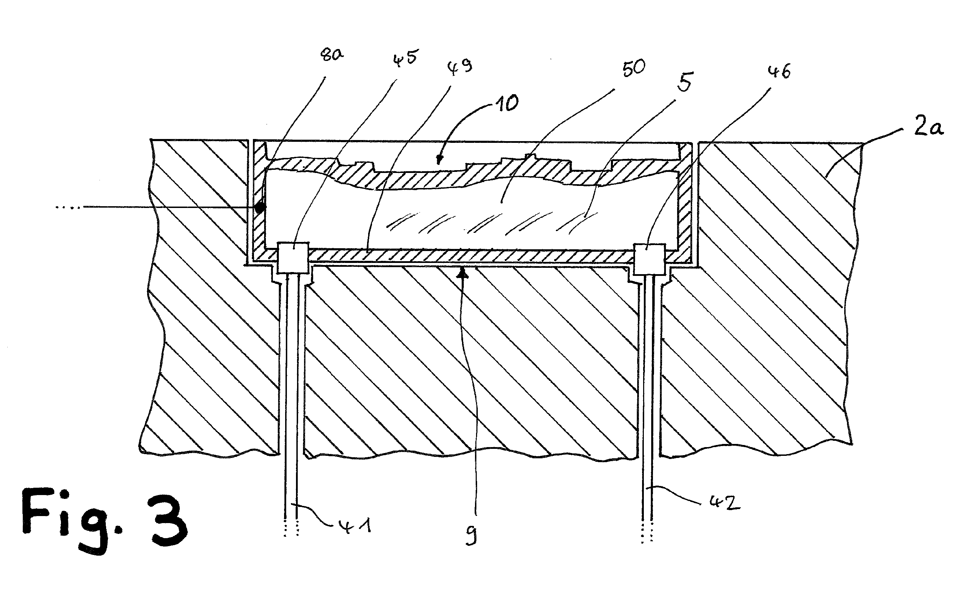

Weitere Einzelheiten des Aufbaus des Trägers 2 sowie des Werkzeugs 3 werden nachstehend in Verbindung mit Figur 2 beschrieben. Figur 2 zeigt im Einzelnen den Träger 2 und speziell den unteren Trägerteil 2a und den oberen Trägerteil 2b, die zueinander fluchtend in einem vorbestimmten Abstand angeordnet sind. In dem jeweiligen unteren oder oberen Trägerteil 2a und 2b ist der entsprechende untere oder obere Werkzeugteil 3a und 3b eingesetzt. Hierzu weist der jeweilige untere oder obere Trägerteil 2a und 2b eine entsprechende Vertiefung 9 auf, die geringfügig größer ist als die äußeren Abmessungen des jeweiligen Werkzeugteils 3a und 3b, so dass das jeweilige Werkzeugteil 3a und 3b bündig in die Vertiefung 9 eingesetzt werden kann. Bis auf eine Formoberfläche 10 als Teil des Werkzeugs 3, der mit dem eingebrachten Kunststoffmaterial in Verbindung steht, werden sämtliche weitere Wände des Werkzeugs 3 durch den Träger 2 in entsprechender Weise gehalten und gestützt. Ungeachtet dessen, dass in der zeichnerischen Darstellung beispielsweise in den Figuren 2 und 3 ein geringer Spalt zwischen der äußeren Kontur des jeweiligen Werkzeugteils 3a und 3b und der Vertiefung 9 des jeweiligen Trägerteils 2a und 2b gezeigt ist, liegen vorzugsweise die Wände des jeweiligen Werkzeugteils 3a und 3b bündig und bis auf unvermeidbare Toleranzen im Wesentlichen an der gesamten Fläche (mit Ausnahme der Formoberfläche 10) in der Vertiefung 9 des jeweiligen Trägerteils 2a oder 2b an. Die Formoberfläche 10 des Werkzeugs 3 stellt einen Teil der (negativen) Kontur des zu bildenden Werkstücks dar.

Figur 2 zeigt in gleichartiger Weise wie Figur 1 die im Zusammenhang mit Figur 1 beschriebenen ersten bis vierten Kühlverbindungen 41 bis 44 der Kühleinrichtung 4, die jeweils einerseits mit der Kühleinheit 40 verbunden sind und andererseits eine entsprechende Verbindung aufweisen zu dem jeweiligen Werkzeugteil 3a oder 3b. Die erste und zweite Kühlverbindung 41 und 42 sind gemäß Figur 2 mit dem unteren Werkzeugteil 3a verbunden, und die dritte und vierte Kühlverbindung 43 und 44 sind mit dem oberen Werkzeugteil 3b verbunden. Die jeweiligen Kühlverbindungen 41 bis 44 werden durch entsprechende Öffnungen oder Kanäle in dem unteren und oberen Trägerteil 2a und 2b bis zum jeweiligen Werkzeugteil 3a und 3b geführt. Im Einzelnen ist diese Situation in Figur 3 veranschaulicht.

Hinsichtlich einer verbesserten Kühlung kann der Träger 2 bzw. können die einzelnen Trägerteile 2a und 2b ebenfalls Kühleinrichtungen aufweisen. In Figur 2 sind Kühlanschlüsse 21 bis 24 angegeben, durch die ein Kühlmittel den Träger 2 in vorbestimmter Weise durchströmen kann. Das Kühlmittel des Trägers 2 kann identisch mit dem Kühlmedium 5 oder unterschiedlich sein, und es kann der Träger 2 mit der Kühleinheit 40 oder mit einer davon unabhängigen weiteren Kühleinheit verbunden sein. Die jeweilige Kühlung des Trägers 2 und des Werkzeugs 3 kann mittels der Steuerungseinrichtung 7 gesteuert oder geregelt werden, und es können die jeweiligen Kühlkonzepte aufeinander abgestimmt werden.

Figur 3 zeigt das untere Trägerteil 2a sowie weitere Einzelheiten des unteren Werkzeugteils 3a, das in den unteren Trägerteil 2a eingesetzt ist. Die erste Kühlverbindung 41 wird durch das untere Trägerteil 2a in Richtung des unteren Werkzeugteils 3a geführt und mittels einer ersten Ventileinrichtung 45 mechanisch fest und fluiddicht mit dem unteren Werkzeugteil 3a verbunden. Die zweite Kühlverbindung 42 wird ebenfalls in einer entsprechenden Vertiefung oder einem Kanal im unteren Trägerteil 2a in Richtung des unteren Werkzeugteils 3a geführt und in gleichartiger Weise wie bei der ersten Kühlverbindung 41 mittels einer zweiten Ventileinrichtung 46 mechanisch fest und fluiddicht mit dem unteren Werkzeugteil 3a verbunden. Vorzugsweise werden hierbei die jeweiligen Ventileinrichtungen 45 und 46 in eine untere Oberfläche oder eine untere Wand 49 des unteren Werkzeugteils 3a eingesetzt.

Während Figur 3 lediglich die Anordnung des unteren Trägerteils 2a aus Gründen der Vereinfachung der Darstellung zeigt, gelten die Ausführungen bezüglich des Aufbaus des Werkzeugs 3 und des Trägers 2 der Gießanlage 1 sinngemäß auch für das obere Trägerteil 2b und das obere Werkzeugteil 3b. Bezüglich des oberen Werkzeugteils 3b werden die dritte und vierte Kühlverbindung 43 und 44 mit einer jeweiligen dritten und vierten Ventileinrichtung 47 und 48 verbunden, und es sind die dritte und vierte Ventileinrichtung 47 und 48 ebenfalls fluiddicht in eine rückseitige Wand 49 des oberen Werkzeugteils 3b eingesetzt.

Die Ventileinrichtungen 45 bis 48 stellen mechanische oder elektromechanische Einrichtungen dar, die betätigt werden können zum Durchlassen des Kühlmediums 5 oder Sperren einer Strömung desselben. Die Ventileinrichtungen 45 bis 48 können manuell oder vorzugsweise durch eine entsprechende Ansteuerung mittels der Steuerungseinrichtung 7 in den gewünschten Schaltzustand versetzt werden. Für eine Einstellung der Ventileinrichtungen 45 bis 48 können diese mit der Steuerungseinrichtung 7 eine entsprechende elektrische Verbindung ausweisen. Es können die Ventileinrichtungen 45 bis 48 alle gleichzeitig oder zeitlich unabhängig voneinander in den gewünschten Schaltzustand versetzt werden.

Neben den vorstehend angegebene Komponenten der Kühleinrichtung 4, wie die zumindest die Kühleinheit 40 sowie die erste, zweite, dritte und vierte Kühlverbindung 41 bis 44 einschließlich des Kühlmediums 5 sowie des Wärmetauschers 6, umfasst die Kühleinrichtung 4 des Weiteren die ersten bis vierten Ventileinrichtungen 45 bis 48. Die Kühleinrichtung 4 kann zumindest bei einem Werkzeugteil 3a oder 3b oder bei beiden Werkzeugteilen 3a und 3b angeordnet sein.

Wie es in den Figuren 2 und 3 angegeben ist, weist sowohl der untere als auch der obere Werkzeugteil 3a und 3b einen inneren Raum 50 (Hohlraum) auf, der zwischen Seitenwänden und der Formoberfläche 10 ausgebildet ist und der bei der Herstellung des Werkzeugs 3 als Hohlraum verbleibt und nach dem Einsetzen in den Träger 2 der Gießanlage 1 während der Durchführung eines Gießvorgangs mit dem Kühlmedium 5 gefüllt ist. In Figur 3 ist das Kühlmedium 5 in vereinfachter Darstellung angedeutet. Das Kühlmedium 5 gelangt durch eine der Kühlverbindungen 41 oder 42 in den inneren Raum 50 und kann über die jeweils andere Kühlverbindung 42 oder 41 wieder ausströmen bzw. entnommen werden. Dies gilt in entsprechender Weise auch für den oberen Werkzeugteil 3b. Vorzugsweise weisen sowohl der untere als auch der obere Werkzeugteil 3a und 3b den inneren Raum 50 auf, wobei die Erfindung hierauf nicht festgelegt ist und in Abhängigkeit von dem Aufbau des zu bildenden Werkstücks und dem zugehörigen Werkzeug 3 auch lediglich ein Werkzeugteil 3a oder 3b (und damit zumindest ein Werkzeugteil) den inneren Raum 50 aufweist.

In Verbindung mit der Beschreibung des Aufbaus der Gießanlage 1, des Trägers 2 und des Werkzeugs 3 entsprechend den Figuren 1 bis 3 sowie der zugehörigen Interaktion zwischen diesen Komponenten wird nachstehend die Wirkungsweise des erfindungsgemäßen Werkzeugs 3 beschrieben.

Gemäß der Darstellung in Figur 3 wird der untere Werkzeugteil 3a in den unteren Trägerteil 2a eingesetzt. Der innere Raum 50 ist in dem unteren Werkzeugteil 3a als Hohlraum vorhanden und es sind in der rückseitigen (unteren) Wand 49 die Ventileinrichtungen 45 und 46 angeordnet. Die gleichartige Anordnung wird in Verbindung mit dem oberen Trägerteil 2b und dem oberen Werkzeugteil 3b gebildet. Die jeweiligen Trägerteile 2a und 2b sind voneinander um einen vorbestimmten Abstand getrennt angeordnet, so dass die entsprechenden Werkzeugteile 3a und 3b eingesetzt und die Ventileinrichtungen 45 bis 48 an den jeweiligen Werkzeugteilen 3a und 3b fluiddicht befestigt werden können. Nach der Aufbereitung des Trägers 2 können die Trägerteile 2a und 2b zusammengefahren und damit geschlossen werden, so dass die jeweiligen Formoberflächen 10 des unteren und oberen Werkzeugteils 3a und 3b einen gemeinsamen Hohlraum bilden, in dem das Werkstück geformt wird, wenn das Kunststoffmaterial für das Werkstück in diesen Hohlraum eingebracht wird. Zur Vereinfachung der Darstellung sind in den Figuren die Einrichtungen zum Einbringen des Kunststoffmaterials in den Raum zwischen den Werkzeugteilen 3a und 3b nicht gezeigt.

Vor dem Einbringen des Kunststoffmaterials zur Bildung des Werkstücks, d. h. vor dem Einleiten eines Gießvorgangs, strömt das Kühlmedium 5 über die entsprechenden Kühlverbindungen 41 bis 44 und die jeweiligen Ventileinrichtungen 45 bis 48 in den jeweiligen inneren Raum 50 des unteren oder oberen Werkzeugteils 3a und 3b ein, so dass der innere Raum 50 vollständig mit dem fluiden Kühlmedium 5, beispielsweise einer Flüssigkeit wie Wasser oder Öl oder einem speziellen Flüssigkeitsgemisch, gefüllt ist. Bei der Füllung des inneren Raums 50 mit dem Kühlmedium 5 erfolgt die Zufuhr des Kühlmediums 5 mit einem vorbestimmten Druck, wobei eine Durchströmung des inneren Raums 50 bewirkt wird, damit mögliche Gas- oder Luftblasen im inneren Raum 50 herausgespült werden. Hierbei sind die Ventileinrichtungen 45 bis 48 geöffnet zum Zulassen einer Strömung des Kühlmediums 5 durch den jeweiligen inneren Raum 50.

Ist der innere Raum 50 (Hohlraum) eines jeweiligen Werkzeugteils 3a und 3b mit dem Kühlmedium 5 vollständig gefüllt, dann werden die jeweiligen Ventileinrichtungen 45 bis 48 bei beiden Werkzeugteilen 3a und 3b geschlossen, so dass das mit einem vorbestimmten Druck in den inneren Raum 50 eingebrachte Kühlmedium 5 in diesem Raum mit dem vorbestimmten Druck verbleibt. Der innere Raum 50 ist mit dem Schließen der Ventileinrichtungen 45 bis 48 fluiddicht verschlossen. Die Größe des Drucks ist derart bemessen, dass das Werkzeug 3 keine oder allenfalls eine geringe Verformung erhält, im Wesentlichen jedoch die Wände des jeweiligen Werkzeugteils 3a und 3b an die inneren Wände der Vertiefung 9 im jeweiligen Trägerteil 2a und 2b anliegen und auch die Formoberfläche 10 nicht aufgewölbt wird.

In diesem Zustand ist das Kühlmedium 5 in dem inneren Raum 50 des jeweiligen Werkzeugteils 3a und 3b hermetisch und druckdicht abgeschlossen, und es kann danach ein Gießvorgang eingeleitet werden. Bei diesem Gießvorgang wird mit einem in Abhängigkeit von der Komplexität des Werkstücks und der Art des Kunststoffs vorbestimmten Druck das plastifizierte Kunststoffmaterial in den Raum zwischen den jeweiligen Formoberflächen 10 eingebracht. Ist der Raum zwischen den Formoberflächen 10 des unteren und oberen Werkzeugteils 3a und 3b vollständig mit dem Kunststoffmaterial gefüllt, kann nach einem entsprechenden Erkalten das Werkstück entnommen werden, indem der untere und obere Trägerteil 2a und 2b voneinander getrennt werden.

Mit dem Einbringen des plastifizierten Kunststoffmaterials in das Werkzeug 3 gibt das Kunststoffmaterial Wärme an das Werkzeug 3 ab, und vorzugsweise an das Kühlmedium 5, das sich im jeweiligen inneren Raum 50 eines betreffenden Werkzeugteils 3a oder 3b befindet. Das Kühlmedium 5 wird dabei aufgewärmt.

Ist die Temperatur des Kühlmediums 5 kleiner als ein vorbestimmter Schwellenwert, dann kann erneut ein Gießvorgang durchgeführt werden. Die Temperatur des Kühlmediums 5 in dem jeweiligen Werkzeugteil 3a und 3b kann mittels den in den Figuren gezeigten Temperatursensoren 8a und 8b erfasst und die jeweilige Information in Form von Erfassungssignalen der Steuerungseinrichtung 7 zugeführt werden. Auf Seiten der Steuerungseinrichtung 7 kann dann ein weiterer Gießvorgang eingeleitet werden, oder bei erhöhter Temperatur des Kühlmediums 5 können die Gießvorgänge zeitweilig unterbrochen und die Ventileinrichtungen 45 bis 48 geöffnet werden, damit die Menge des Kühlmediums 5 im jeweiligen inneren Raum 50 des unteren und oberen Werkzeugteils 3a und 3b gegen ein kühleres Kühlmedium 5 ausgetauscht werden kann. Nachdem das erwärmte Kühlmedium 5 vollständig aus dem inneren Raum 50 entfernt und durch ein kühleres Kühlmedium 5 ersetzt wurde, werden die jeweiligen Ventileinrichtungen 45 bis 48 erneut geschlossen, und es kann zumindest ein weiterer Gießvorgang oder können mehrere weitere Gießvorgänge durchgeführt werden.

Sobald die Temperatur des Kühlmediums 5 (Temperatursensoren 8a und 8b) höher ist als ein vorbestimmter Schwellenwert, erfolgt ein Austausch des Kühlmediums 5. Das erwärmte Kühlmedium 5 kann entsprechend einer Steuerung durch die Steuerungseinrichtung 7 mittels des Wärmetauschers 6 wieder abgekühlt werden.

Mit der Anordnung jeweils zumindest eines Temperatursensors 8a und 8b an dem entsprechenden Werkzeugteil 3a und 3b besteht die Möglichkeit, grundsätzlich das Kühlmedium 5 in den inneren Räumen 50 beider Werkzeugteile gleichzeitig nach einer erreichten Anzahl von Gießvorgängen oder bei erhöhter Temperatur des Kühlmediums 5 in einem inneren Raum 50 gegen ein kühleres Kühlmedium 5 zu tauschen. Es kann jedoch ein Austausch des Kühlmediums 5 auch für jedes Werkzeugteil 3a oder 3b getrennt und jeweils temperaturabhängig erfolgen.

Mit der vorstehend beschriebenen erfindungsgemäßen Anordnung des Werkzeugs 3 ergeben sich die folgenden Vorteile. Das Werkzeug 3 mit dem vorstehend beschriebenen Aufbau und insbesondere dem flüssigen Kühlmedium (Wärmeleitmaterial) 5, das sich im inneren Raum 50 des jeweiligen Werkzeugteils 3a oder 3b befindet, wird zu einem formstabilen Werkzeug, das seine Gestalt beibehält, auch wenn das Gießmaterial in Form des Kunststoffmaterials mit dem erforderlichen Druck in das Werkzeug 3 eingebracht wird. Das Kühlmedium 5 vorzugsweise in Form einer Flüssigkeit ist nahezu inkompressibel und leitet bei geschlossenen Ventileinrichtungen 45 bis 48 den Druck, der auf die jeweilige Formoberfläche 10 eines Werkzeugteils 3a oder 3b nach dem Einbringen des Kunststoffmaterials in das Werkzeug 3 ausgeübt wird, durch das jeweilige Werkzeugteil 3a und 3b zur rückseitigen Wand 49 weiter, und es liegt die rückseitige Wand 49 vollständig an der entsprechenden Oberfläche der Vertiefung 9 des jeweiligen Trägerteils 2a und 2b an, so dass die Kraft auch auf den Träger 2 weitergegeben wird. Somit können die auf das untere oder obere Werkzeugteil 3a oder 3b ausgeübten Kräfte während des Gießvorgangs nahezu vollständig auf den Träger 2 geleitet werden, der in der Lage ist, die bei einem Gießvorgang auftretenden Kräfte vollständig und ohne Verformung aufzunehmen.

Das Werkzeug 3 behält somit bei dieser Druck- und Temperaturbelastung während des Gießvorgangs seine Gestalt unverändert bei. Die Gestalt wird grundsätzlich beibehalten, ungeachtet dessen, dass zwischen der äußeren Oberfläche des jeweiligen Werkzeugteils 3a oder 3b (d. h. der Formoberfläche 10) mit der Kontur des Werkstücks und dem inneren Raum 50 des jeweiligen Werkzeugteils 3a und 3b eine vergleichsweise dünne Wand vorgesehen ist. Das vorzugsweise flüssige Kühlmedium 5, das bei geschlossenen Ventileinrichtungen 45 bis 48 druckdicht in dem inneren Raum 50 des jeweiligen Werkzeugteils 3a und 3b eingeschlossen ist, stützt und stabilisiert die dünne Wand der Formoberfläche 10 und verteilt den ausgeübten Druck in Folge des Gießvorgangs gleichmäßig im inneren Raum 50 des jeweiligen Werkzeugteils 3a und 3b, und damit auch auf sämtliche Außenwände des Werkzeugteils 3a oder 3b, so dass die entsprechenden Druckkräfte auf den Träger 2 ausgeübt werden.

Das Werkzeug 3 besteht aus einem Kunststoff, wobei beide Werkzeugteile aus demselben oder bedarfsweise aus einem unterschiedlichen Kunststoff bestehen. Die Erfindung ist hierauf jedoch nicht beschränkt, vielmehr besteht alternativ das Werkzeug 3 aus unterschiedlichen Materialien, wobei nur ein Werkzeugteil 3a oder 3b aus einem Kunststoff besteht, während das andere Werkzeugteil 3b oder 3a aus einem Metall besteht, sofern die Ausgestaltung des Werkstücks die Herstellung des einen Werkzeugteils 3a oder 3b aus Metall rechtfertigt. Somit besteht zumindest ein Werkzeugteil 3a oder 3b aus einem Kunststoff.

Der Träger 2 umschließt das vorzugsweise aus Kunststoff bestehende Werkzeug 3 weitgehend (bis auf die mit dem Kunststoffmaterial in Kontakt stehende Formoberfläche 10 und die nicht gezeigten Zulaufeinrichtungen für das Kunststoffmaterial), und es ist das jeweilige Werkzeugteil 3a und 3b passgenau in den Träger (in die jeweilige Vertiefung 9) eingesetzt. Der Träger 2 weist lediglich entsprechende Ausnehmungen auf zur Aufnahme der Kühlverbindungen 41 bis 44 und der Ventileinrichtungen 45 bis 48, und es ist der Träger 2, der im Allgemeinen aus einem Metall wie Stahl oder Aluminium besteht, vollständig in der Lage, die von dem Werkzeug 3 während des Gießvorgangs abgegebenen Kräfte aufzunehmen, so dass durch den Träger 2 das vollständige Werkzeug 3 gestützt wird und dessen Gestalt auch während des Gießvorgangs vollständig erhalten bleibt. Es ist hierbei möglich, ein qualitativ hochwertiges und massgenaues Werkstück auch bei häufigen Gießvorgängen aus demselben Werkzeug 3 herzustellen.

Mit dem Kühlmedium 5 in Form beispielsweise einer inkompressiblen Flüssigkeit als Wärmeleitmaterial besteht die Möglichkeit, auf einfache Weise das Kühlmedium 5 in den inneren Raum 50 einzubringen, wobei dies nach dem vollständigen Einbringen in den inneren Raum 50 hermetisch (fluiddicht) abgeschlossen wird und in Folge der Inkompressibilität des Materials des Kühlmediums 5 die Stabilität des Werkzeugs 3 erhält. Es tritt während des Gießvorgangs keine unerwünschte Verformung des Werkzeugs 3 auf.

Nach dem Beenden des Gießvorgangs und der Entnahme des fertigen Werkstücks kann das Kühlmedium 5 sehr einfach durch Öffnen der Ventileinrichtungen 45 bis 48 ausgetauscht werden, so dass sehr schnell wieder das Kühlmedium 5 mit einer für weitere Gießvorgänge angemessenen Temperatur in den inneren Raum 50 eingebracht werden kann. Auf diese Weise ist gewährleistet, dass Gießvorgänge in rascher Folge durchgeführt werden können, und bei einer weiteren Erwärmung des Werkzeugs 3 und des Kühlmediums 5 letzteres sehr einfach und schnell ausgetauscht werden kann, ohne dass das Werkzeug 3 aus dem Träger 2 entfernt werden muss. Es kann dies zumindest teilweise automatisiert erfolgen, indem die Steuerungseinrichtung jeweilige Temperaturerfassungen auswertet und entsprechende Maßnahmen ergreift, wie die Fortsetzung von Gießvorgängen oder den Austausch des Kühlmediums 5. Es kann somit bei einer entsprechenden Automatisierung auf einen manuellen Eingriff durch ein Bedienpersonal weitgehend verzichtet werden.

Mit der Möglichkeit, dass das inkompressible Kühlmedium 5 im inneren Raum 50 des jeweiligen Werkzeugteils 3a und 3b (in zumindest einem Werkzeugteil) angeordnet ist, kann auch ein aus Kunststoff bestehendes Werkzeug 3 vergleichsweise preisgünstig und schnell hergestellt werden. Das Werkzeug 3 aus einem Kunststoffmaterial, das vergleichsweise dünne Wände aufweist und das ohne eine Füllung mit dem Kühlmedium 5 auf Druck relativ nachgiebig und mit Verformung reagiert, wird mittels des inkompressiblen Kühlmediums 5 auf einfache und in jedem Fall ausreichende Weise stabilisiert, so dass unerwünschte Verformungen vermieden werden können.

Im Vergleich zu Metallpasten oder sonstigen in einen Hohlraum des jeweiligen Werkzeugs 3 einzubringenden Metallteilen kann mit der erfindungsgemäßen Anordnung ein Wechsel des (aufgewärmten) Kühlmediums 5 sehr einfach und schnell erfolgen. Das Einbringen von weiteren der Kühlung und Stabilisierung dienenden Materialien sowie das Einbringen von speziellen Materialien (zumeist Metallteile) in die Wände der Werkzeugteile zur verbesserten Wärmeableitung oder Stabilisierung ist nicht erforderlich, so dass der gesamte Aufwand zur Herstellung des Werkzeugs 3 und seiner Wartung mit der erfindungsgemäßen Lösung erheblich geringer ist.

Das in den inneren Raum 50 des jeweiligen Werkzeugteils 3a und 3b eingebrachte Kühlmedium 5 dient somit einerseits als Wärmeleitmaterial zur Aufnahme und Ableitung der während des Gießvorgangs entstehenden Wärme, und andererseits zur Stabilisierung der äußeren Gestalt oder Form des Werkzeugs 3 in Folge des in dem inneren Raum 50 zeitweilig (d. h. zumindest während eines Gießvorgangs) hermetisch abgeschlossenen Kühlmediums 5. Aus dem verschlossenen und abgedichteten inneren Raum 50 kann während des Gießvorgangs kein Kühlmedium 5 ein- oder austreten, so dass das Werkzeugteil 3a oder 3b hinsichtlich seiner Form und äußeren Gestalt stabil bleibt. Die Abdichtung des inneren Raums 50 eines jeweiligen Werkzeugteils 3a und 3b erfolgt durch die entsprechenden Wände einschließlich der rückseitigen Wand 49 des Werkzeugteils 3a und 3b sowie den in der rückseitigen Wand 49 angeordneten Ventileinrichtungen 45 bis 48. Werden die Ventileinrichtungen 45 bis 48 geschlossen, dann kann auch über die Kühlverbindungen 41 bis 44 kein Kühlmedium 5 in den inneren Raum 50 eingebracht oder aus diesem entnommen werden.

Alternativ zur vorstehend angegebenen Anordnung der Ventileinrichtungen 45 bis 48 in dem jeweiligen Werkzeugteil 3a oder 3b, beispielsweise gemäß den Figuren 1 bis 3 in der rückseitigen Wand 49 oder dem Deckelelement 51, können die Ventileinrichtungen 45 bis 48 auch im Verlauf der Kühlverbindungen 41 bis 44 oder in der Kühleinheit 40 angeordnet sein. Anstelle der Ventileinrichtungen 45 bis 48 sind dann in die rückseitige Wand 49 oder das Deckelelement 51 lediglich Anschlusselemente für die Kühlverbindungen 41 bis 44 fluiddicht eingesetzt. Mittels dieser Anschlusselemente sind die Kühlverbindungen 41 bis 44 auch mechanisch befestigt.

Mit einer derartigen alternativen Anordnung kann ebenfalls das Kühlmedium 5 in den jeweiligen Werkzeugteil 3a oder 3b (d. h. in dem zugehörigen inneren Raum 50) eingeschlossen werden, wobei das Volumen des eingeschlossenen und an einer Strömung gehinderten Kühlmediums 5 neben dem Volumen des jeweiligen inneren Raums 50 auch das Volumen des Kühlmediums 5 in den Kühlverbindungen 41 bis 44 bis zur Anordnung der Ventileinrichtungen 45 bis 48 und somit (zumindest teilweise) bis zur Kühleinheit 40 umfasst. In Abhängigkeit von der Ausgestaltung und der Komplexität des Werkzeugs 3 können die Ventileinrichtungen 45 bis 48 teilweise an dem Werkzeug 3 selbst oder in den Kühlverbindungen 41 bis 44 angeordnet sein, und es kann die Anordnung bei dem unteren Werkzeugteil 3a gleich oder unterschiedlich zum oberen Werkzeugteil 3b sein. Die unterschiedlichen Anordnungen und die Positionierung der Ventileinrichtungen 45 bis 48 verändern nicht die Wirkungsweise und die Vorteile des erfindungsgemäßen Werkzeugs 3.

Sind die Ventileinrichtungen 45 bis 48 in den Kühlverbindungen 41 bis 44 angeordnet oder in der Kühleinheit 40 für jede Kühlverbindung 41 bis 44, dann umfasst das Volumen des bei dem Gießvorgang druckdicht eingeschlossene Kühlmediums 5 das Volumen des inneren Raums 50 sowie der jeweiligen Kühlverbindungen bis zur Position der jeweiligen Ventileinrichtung 45 bis 48. Das Volumen des inneren Raums 50 des jeweiligen unteren oder oberen Werkzeugteils 3a oder 3b kann gleich oder in Abhängigkeit von dem Aufbau des Werkzeugs 3 und des Werkstücks unterschiedlich sein. Bei dem Austausch des im Verlauf mehrerer Gießvorgänge erwärmten Kühlmediums 5 kann mittels der Temperatursensoren 8a und 8b bestimmt werden, ob sich in dem Werkzeug 3 (im inneren Raum 50) bereits genügend Kühlmedium mit einer niedrigeren Temperatur für nachfolgende Gießvorgänge befindet. Hierzu können alternativ oder ergänzend Temperatursensoren in den Kühlverbindungen 41 bis 44 vorgesehen sein.

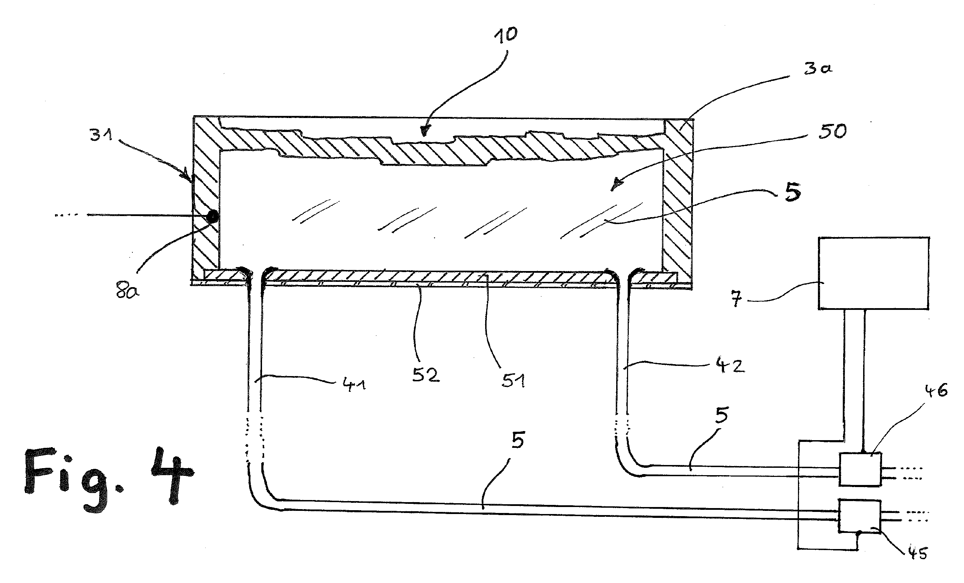

Figur 4 zeigt eine weitere Variante des Werkzeugs, 3 wobei gemäß Figur 4 lediglich in schematischer und vereinfachter Form das untere Werkzeugteil 3a gezeigt ist. Die Ausführungen gelten sinngemäß ebenso für das obere Werkzeugteil 3b. Ebenso wird zur Durchführung von Gießvorgängen das untere Werkzeugteil 3a gemäß Figur 4 in den unteren (in Figur 4 nicht gezeigten) Trägerteil 2a eingesetzt. Der Träger 2 bzw. der untere Trägerteil 2a sind nicht dargestellt, jedoch entspricht die Anordnung der Darstellung in Figur 3, bei der das untere Werkzeugteil 3a in das untere Trägerteil 2a eingesetzt ist.

In Figur 4 ist das untere Werkzeugteil 3a in ähnlicher Weise aufgebaut wie das untere Werkzeugteil 3a gemäß Figur 3, wobei im Unterschied zur Darstellung in Figur 3 das untere Werkzeugteil 3a gemäß Figur 4 nicht einstückig ausgebildet und umfasst die Formoberfläche 10 sowie die zugehörigen Seitenwänden, die zusammen ein Werkzeugelement 31 bilden und in dem beispielsweise der Temperatursensor 8a angeordnet ist. Zur Bildung des gesamten unteren oder oberen Werkzeugteils 3a oder 3b wird das Werkzeugelement 31 ergänzt durch ein Deckelelement 51 als ein separates Teil, das die zur Formoberfläche 10 gegenüberliegende Seite abdeckt.

Die Ventileinrichtungen 45 und 46 können in dem Deckelement 51 fluiddicht und druckdicht angeordnet sein. Zur Veranschaulichung der vorstehen beschriebenen alternativen Anordnung der Ventileinrichtungen 45 und 46 sind jedoch gemäß Figur 4 die Ventileinrichtungen 45 und 46 fluiddicht und druckdicht in die Kühlverbindungen 41 bis 44 eingesetzt. Im Deckelelement 51 sind lediglich entsprechende Anschlusselemente vorgesehen, die jedoch ebenfalls einen fluiddichten und druckdichten Anschluss der Kühlverbindungen 41 bis 44 gewährleisten. Die alternative Anordnung ist in Figur 4 gezeigt. Zum Öffnen oder Schließen der Ventileinrichtungen 45 bis 48 sind diese mit der Steuerungseinrichtung 7 verbunden und werden entsprechend mit elektrischen Signalen angesteuert.

Das Deckelelement 51 ist seinerseits fluiddicht in die weiteren Teile des unteren Werkzeugteils 3a, d. h. in das Werkzeugelement 31eingesetzt, so dass ein vollständiges unteres Werkzeugteil 3a gebildet wird. Das obere Werkzeugteil 3b ist in gleichartiger Weise aufgebaut oder alternativ einstückig aufgebaut.

Zur Verbesserung der Abdichtung und zum druckfesten und fluiddichten Einsetzen des Deckelelements 51 in das Werkzeugelement 31 ist gemäß einer weiteren Variante eine Abdeckung 52 vorgesehen, die vorzugsweise flächig auf dem Deckelelement 51 angeordnet und ebenfalls mit dem Werkzeugelement 31 verbunden ist. Insgesamt wird somit eine stabile und fluiddichte Abdeckung des jeweiligen unteren oder oberen Werkzeugteils 3a und 3b erreicht, wobei auch eine vorbestimmte Druckfestigkeit erzielt wird, so dass in Vorbereitung eines Gießvorgangs beim Einbringen des Kühlmediums 5 bereits das Kühlmedium 5 zur Stabilisierung des Werkzeugs 3 den vorbestimmten Druck aufweisen kann und das Werkzeug 3 bzw. die einzelnen Werkzeugteile 3a und 3b durch diesen vorbestimmten Druck des Kühlmediums 5 auch ohne das in das Werkzeug 3 eingebrachte Kunststoffmaterial während des Gießvorgangs nicht oder nur unwesentlich verformt wird.

In jedem Fall ist das Deckelelement 51 als Teil des unteren oder oberen Werkzeugteils 3a und 3b oder das Deckelelement 51 in Verbindung mit der Abdeckung 52 in der Lage, die in dem Werkzeug 3 und speziell in Verbindung mit dem Kühlmedium 5 auftretenden Drücke während eines Gießvorgangs an die entsprechende Umgebung, und in diesem Fall an das untere oder obere Trägerteil 2a und 2b sicher weiterzuleiten. In gleicher Weise, wie es in Figur 3 dargestellt ist, wobei die rückseitige Wand 49 des einteiligen Werkzeugteils 3a oder 3b vollflächig auf der entsprechenden Oberfläche der Vertiefung 9 im Träger 2 anliegt, trifft dies auch auf das Deckelelement 51 oder das Deckelelement 51 einschließlich der Abdeckung 52 zu. Das untere Werkzeugteil 3a ist ebenfalls derart in das untere Trägerteil 2a eingesetzt, dass sämtliche Wände des unteren Werkzeugteils 3a flächig an den Wänden der Vertiefung 9 des unteren Trägerteils 2a anliegen. Es ist auf diese Weise die sichere Weitergabe der auftretenden Drücke und Kräfte an die durch den Träger 2 gebildete Umgebung des Werkzeugs 3 gewährleistet.

Die weitere Funktion und Wirkungsweise des Werkzeugs 3 gemäß den in Figur 4 gezeigten Varianten ist gleichartig zu dem Werkzeug 3 gemäß den vorherigen Figuren.

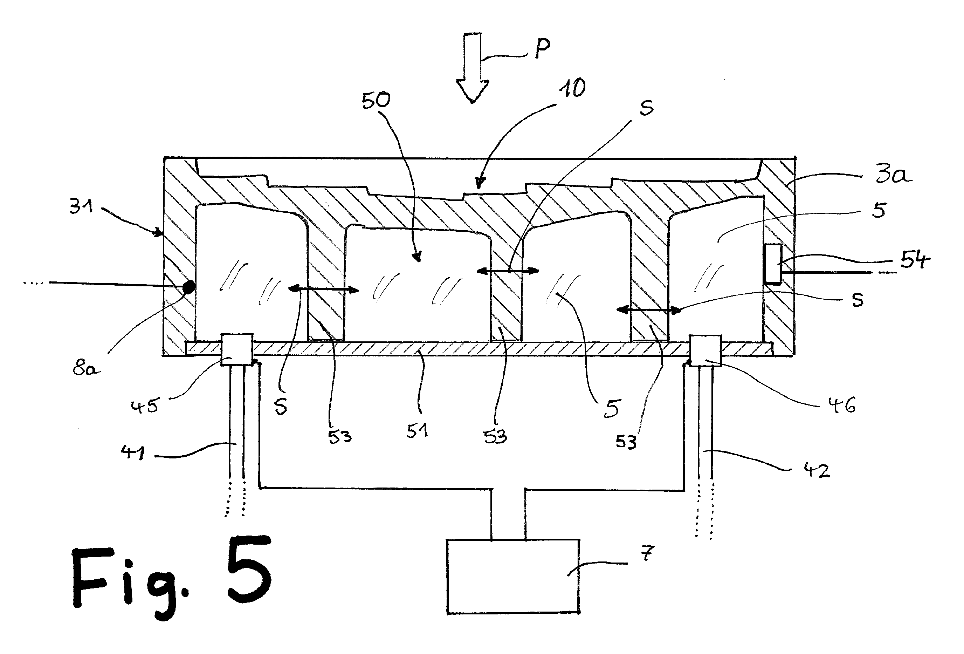

Figur 5 zeigt eine weitere Variante der Ausführung des unteren Werkzeugteils 3a. Die auf das untere Werkzeugteil 3a bezogene Beschreibung gilt sinngemäß auch für das obere Werkzeugteil 3b.

Figur 5 zeigt das unteren Werkzeugteil 3a mit der entsprechenden Formoberfläche 10, wobei mittels eines Pfeils P eine Hauptrichtung eines Drucks angegeben ist, der auf die Formoberfläche 10 wirkt, wenn ein Gießvorgang durchgeführt wird und in das Werkzeug 3 das plastifizierte Kunststoffmaterial zur Bildung des gewünschten Werkstücks mit einem vorbestimmten Druck eingebracht wird.

Das untere Werkzeugteil 3a ist in diesem Fall beispielsweise zweiteilig ausgeführt und umfasst neben der Formoberfläche 10 die zugehörigen Seitenwände, die zusammen das Werkzeugelement 31 bilden, sowie das bereits in Verbindung mit Figur 4 beschriebene Deckelelement 51 zum fluiddichten und druckfesten Abschließen des Werkzeugelements 31 des unteren Werkzeugteils 3a. In dem Deckelelement 51 sind die Ventileinrichtungen 45 und 46 ebenfalls fluiddicht und druckfest eingesetzt, damit das Kühlmedium 5 in den inneren Raum 50 des unteren Werkzeugteils 3a eingebracht, aus diesem entnommen und auch in diesem fluiddicht eingeschlossen werden kann. Die Ventileinrichtungen 45 bis 48 werden zum Öffnen und Schließen mittels der Steuerungseinrichtung 7 angesteuert. In gleicher Weise wie bei der Anordnung gemäß Figur 4 können die Ventileinrichtungen 45 bis 48 auch alternativ in den zugehörigen Kühlverbindungen 41 bis 44 angeordnet sein.

Im Unterschied zur Darstellung des unteren Werkzeugteils 3a gemäß den Figuren 1 bis 4 umfasst der untere Werkzeugteil 3a (und sinngemäß auch der obere Werkzeugteil 3b) des Werkzeugelements ausgehend von der Wand des Werkzeugteils 3a oder 3b, die die Formoberfläche 10 trägt, Stützen oder Stege 53, die sich von der Wand der Formoberfläche 10 in Richtung des Deckelelements 51 erstrecken und ganz oder zumindest teilweise an dem Deckelelement 51 anliegen. Das in Figur 5 gezeigte untere Werkzeugteil 3a kann auch alternativ anstelle des Deckelelements 51 in Kombination das Deckelelement 51 und die Abdeckung 52 aufweisen oder eine rückwärtige Seitenwand 49, wie sie in Figur 3 gezeigt ist, wobei in diesem Fall eine einstückige Ausführung des jeweiligen unteren oder oberen Werkzeugteils 3a oder 3b vorliegt.

Die Stützen oder Stege 53 dienen zur weiteren Stabilisierung des Werkzeugs 3 und sind in der Weise ausgebildet, dass einerseits innerhalb des inneren Raums 50 mehrere Kammern gebildet werden, andererseits jedoch die mehreren Kammern nicht abgeschlossen sind, sondern das Kühlmedium 5 zwischen den Kammern zirkulieren kann. Dies ist mittels Pfeilen S in Figur 5 dargestellt. Das Kühlmedium 5 kann somit auf einfache Weise auch bei dem Vorliegen der Stützen oder Stege 53 in dem inneren Raum 50 des jeweiligen Werkzeugteils 3a oder 3b eingebracht oder aus dem Werkzeugteil 3a oder 3b entnommen werden, wobei in den Stützen oder Stegen vorbestimmte Öffnungen vorgesehen sind, damit das Kühlmedium 5 mit einer geringen Behinderung entsprechend den Pfeilen S von einer Kammer zur anderen Kammer innerhalb des inneren Raums 50 strömen kann.

Mittels der Stützen oder Stege 53 kann eine verbesserte Stabilität des Werkzeugs 3 erreicht werden, wobei in der durch den Pfeil P bezeichneten Hauptrichtung des Auftretens der Kräfte und Drücke während des Gießvorgangs eine etwa gleichartige Weiterleitung der durch das Werkzeug aufgenommenen Kräfte und Drücke erfolgen kann. Liegt kein Gießvorgang vor und wird das jeweilige Werkzeugteil 3a oder 3b mit dem Kühlmedium 5 gekühlt, dann kann die Formstabilität des gesamten Werkzeugs 3 verbessert werden, wenn das Kühlmedium 5 in Verbindung mit dem vorstehenden Druck in den inneren Raum 50 eingebracht wird. Es ergeben sich ferner die Vorteile eines stabilen Werkzeugs 3 auch während der Herstellung desselben. Insgesamt wird somit die Handhabung des erfindungsgemäßen Werkzeugs 3 erleichtert und verbessert. Während eines Gießvorgangs erfolgt die Weiterleitung des Drucks gemäß der Hauptdruckrichtung (Pfeil P) über das im Wesentlichen inkompressible Kühlmedium 5 und zu einem kleinen Teil über die Stützen und Stege 53.

Das vorstehend in Verbindung mit den Figuren 4 und 5 beschriebene Deckelelement kann aus einem Kunststoffmaterial gebildet sein. Alternativ kann das Deckelelement 51 auch aus einem Metall bestehen. In der Darstellung gemäß Figur 4 kann das Deckelelement 51 beispielsweise aus einem Kunststoffmaterial oder einem Metall bestehen, und kann die Abdeckung 52 aus einem Kunststoffmaterial bestehen, so dass eine optimale Abdichtung und Stabilisierung des gesamten Werkzeugs (d. h. des unteren und oberen Werkzeugteils 3a und 3b) gewährleistet ist.

Es besteht ferner die Möglichkeit, in jedem der Werkzeugteile 3a und 3b oder zumindest in einem Werkzeugteil 3a oder 3b einen Drucksensor anzuordnen, mittels dessen der Druck innerhalb des jeweiligen Werkzeugteils 3a oder 3b vor, d. h. in dem Kühlmedium 5 während und nach einem Gießvorgang erfasst werden kann. Beispielsweise ist ein derartiger Drucksensor 54 in Figur 5 gezeigt. Er steht in Verbindung mit der Steuerungseinrichtung 7 zur Übertragung von Erfassungssignalen. Es kann des Weiteren zumindest ein Drucksensor auch in den Kühlverbindungen 41 bis 44 oder ergänzend oder alternativ in den Ventileinrichtungen 45 bis 48 angeordnet sein. Mittels jeweiliger Drucksensoren kann der Druck in dem Kühlmedium 5 unter bestimmten Betriebsbedingungen und an vorbestimmten Stellen in der Gießanlage 1 erfasst werden, so dass eine Druckdichtigkeit bzw. das Aufrechterhalten eines erforderlichen Drucks im Kühlmedium 5 erfasst werden kann und dass ferner nach einer entsprechenden Auswertung eines Druckverlaufs während eines Gießvorgangs auch auf den Verlauf und die Eigenschaften des Gießvorgangs selbst in zumindest ungefährer Weise geschlossen werden kann.

Die der Steuerungseinrichtung 7 zugeführten Erfassungssignale jeweiliger Drucksensoren werden zur Steuerung der Gießvorgänge, der Umläufe des Kühlmediums 5 und der Bereitstellung eines vorbestimmten Drucks des Kühlmediums 5 innerhalb des unteren und oberen Werkzeugteils 3a und 3b unmittelbar vor dem Gießvorgang durch entsprechendes Einbringen des Kühlmediums 5 und Schließen der Ventileinrichtungen 45 bis 48 zum hermetischen Abschließen des Kühlmediums 5 innerhalb des inneren Raums 50 jedes Werkzeugteils 3a und 3b verwendet. Durch diese Maßnahmen ist eine weitere Erfassung der Betriebszustände der Gießanlage 1 sowie der einzelnen Werkzeugteile 3a und 3b gewährleistet, so dass schnell mittels der Steuerungseinrichtung 7 erfasst werden kann, falls eine Fehlfunktion der Gießanlage oder Problem bei einem Gießvorgang auftritt, oder eine der Ventileinrichtungen 41 bis 44 nicht geschlossen werden kann oder aus anderen Gründen eine Undichtigkeit und damit ein Druckverlust in der Gießanlage 1 auftritt.

Die Vorteile des erfindungsgemäßen Werkzeugs 3 gemäß Figur 5 sind die gleichen, wie sie vorstehend in Verbindung mit den Figuren 1 bis 4 beschrieben sind.

Die Erfindung wurde vorstehend anhand von Ausführungsbeispielen und zugehörigen Varianten unter Bezugnahme auf die Figuren näher beschrieben.

Es ist jedoch für den auf diesem Gebiet tätigen Fachmann selbstverständlich, dass die Ausgestaltung der vorliegenden Erfindung gemäß den beschriebenen Figuren und die angegebenen Bauteile und Komponenten in den Figuren und der Beschreibung sowie weitere beispielhafte Angaben nicht einschränkend auszulegen sind. Die Erfindung ist auf die angegebene Darstellung in den Figuren, insbesondere auf Dimensionen und Anordnungen nicht beschränkt. Als zur Erfindung gehörig werden sämtliche Ausführungsformen und Varianten angesehen, die unter die beigefügten Patentansprüche fallen.

## Patentansprüche

1. Spritzguss-Werkzeug, das mehrere Werkzeugteile (3a, 3b) umfasst, aus einem Kunststoffmaterial besteht und in einen Werkzeugträger (2) einer Gießanlage (1) zur Durchführung von Gießvorgängen eingesetzt werden kann, wobei
zumindest eines der mehreren Werkzeugteile (3a, 3b) einen inneren Raum (50) aufweist zur Aufnahme eines Kühlmediums (5), und
das zumindest eine Werkzeugteil (3a, 3b) eine Kühleinrichtung (4, 40, 41 bis 44, 45 bis 48) aufweist zum Bewirken einer Durchströmung des inneren Raums (50) mit dem Kühlmedium (5), und
eine Steuerungseinrichtung (7) vorgesehen ist zur Steuerung der Strömung des Kühlmediums (5) durch das zumindest eine Werkzeugteil (3a, 3b), und die Steuerungseinrichtung (7) vorgesehen ist zur Beendigung der Strömung des Kühlmediums (5) durch das zumindest eine Werkzeugteil (3a, 3b) und Aufrechterhalten der vollständigen Füllung des inneren Raums (50) mit dem Kühlmedium (5) zumindest während eines Gießvorgangs.

2. Werkzeug nach Anspruch 1, wobei die Kühleinrichtung (4, 40, 41 bis 44, 45 bis 48) Ventileinrichtungen (45 bis 48) aufweist, die entsprechend einer Ansteuerung durch die Steuerungseinrichtung (7) zum Erlauben einer Strömung des Kühlmediums (5) geöffnet und zum Aufrechterhalten der Füllung des inneren Raums (50) des zumindest einen Werkzeugteils (3a, 3b) geschlossen werden.

3. Werkzeug nach Anspruch 2, wobei die Ventileinrichtungen (45 bis 48) in einer Wand (49; 51) des zumindest einen Werkzeugteils (3a, 3b) angeordnet sind und im geschlossenen Zustand den inneren Raum (50) des zumindest einen Werkzeugteils (3a, 3b) fluiddicht abschließen.

4. Werkzeug nach Anspruch 2, wobei die Ventileinrichtungen (45 bis 48) in Kühlverbindungen (41 bis 44) oder in einer Kühleinheit (40) der Kühleinrichtung (4, 40, 41 bis 44, 45 bis 48) angeordnet sind und im geschlossenen Zustand eine Strömung des Kühlmediums (5) durch das zumindest eine Werkzeugteil (3a, 3b) verhindern und im geöffneten Zustand die Strömung des Kühlmediums (5) durch das zumindest eine Werkzeugteil (3a, 3b) erlauben.

5. Werkzeug nach Anspruch 3 oder 4, wobei das Werkzeug (3) zumindest einen Temperatursensor (8a, 8b) aufweist zur Erfassung der Temperatur des Kühlmediums (5) in dem zumindest einen Werkzeugteil (3a, 3b), und die Steuerungseinrichtung (7) ausgebildet ist, die Ventileinrichtungen (45 bis 48) nach einem oder mehreren Gießvorgängen zu öffnen zum Zulassen einer Strömung des Kühlmediums (5) durch das zumindest eine Werkzeugteil (3a, 3b), wenn ein vorbestimmter Schwellenwert der Temperatur des Kühlmediums (5) erreicht ist.

6. Werkzeug nach Anspruch 3, wobei jedes Werkzeugteil (3a, 3b) zumindest zwei Ventileinrichtungen (45 bis 48) aufweist und die Ventileinrichtungen (45 bis 48) eines Werkzeugteils (3a, 3b) während eines Gießvorgangs gleichzeitig geschlossen sind zum fluiddichten Abschließen des mit dem Kühlmedium (5) vollständig gefüllten inneren Raums (50).

7. Werkzeug nach Anspruch 2, wobei das zumindest eine Werkzeugteil (3a, 3b) ein Werkzeugelement (31) und ein Deckelelement (51) aus einem gleichen oder unterschiedlichen Material wie das Werkzeugelement (31) aufweist, das Deckelelement (51) fluiddicht in das Werkzeugelement (31) eingesetzt ist zur Bildung des inneren Raums (50), und zumindest zwei Ventileinrichtungen (45 bis 48) in das Deckelement (51) fluiddicht eingesetzt sind.

8. Werkzeug nach Anspruch 1, wobei das zumindest eine Werkzeugteil (3a, 3b) ein Werkzeugelement (31) und ein Deckelelement (51) umfasst, und das Werkzeugelement (31) an der dem Deckelelement (51) gegenüberliegenden Seite Stege (53) aufweist, die sich in den inneren Raum (50) bis zum Deckelelement (51) erstrecken.

9. Werkzeug nach Anspruch 8, wobei die Stege (53) derart ausgebildet sind, dass sie in Anlage mit dem in das Werkzeugelement (31) eingesetzten Deckelelement gelangen und in dem inneren Raum (50) eine Mehrzahl von Kammern bilden, die von dem Kühlmedium (5) durchströmt werden.

10. Gießanlage zur Durchführung von Gießvorgängen mittels Kunststoffspritzguss mit einem Träger (2) zur Aufnahme eines Werkzeugs (3) und
einem Werkzeug (3) gemäß den Patentansprüchen 1 bis 9.
